# EUROPÄISCHE PATENTSCHRIFT

(11) **EP 3 808 511 B1**
(45) Veröffentlichungstag und Bekanntmachung des Hinweises auf die Patenterteilung: **31.07.2024**
(21) Anmeldenummer: 19203304.1
(22) Anmeldetag: 15.10.2019
(51) Int. Cl.: B25J 9/16

(54) **VERFAHREN ZUM ÜBERWACHEN EINER ARBEITSUMGEBUNG UND ÜBERWACHUNGSEINRICHTUNG**
METHOD FOR MONITORING A WORKING ENVIRONMENT AND MONITORING DEVICE
PROCÉDÉ DE SURVEILLANCE D'UN ENVIRONNEMENT DE TRAVAIL ET DISPOSITIF DE SURVEILLANCE

(43) Veröffentlichungstag der Anmeldung: 21.04.2021
(73) Patentinhaber: Siemens Aktiengesellschaft, 80333 München (DE)
(72) Erfinder: Frank, Matthias, 91052 Erlangen (DE); Heilmann, Reiner, 85658 Egmating (DE); Le, Minh, 91058 Erlangen (DE); Stein, Alexander, 90587 Veitsbronn (DE); Walter, Maximilian, 90408 Nürnberg (DE)
(74) Vertreter: Siemens Patent Attorneys

(56) Entgegenhaltungen:
- EP-A1- 2 594 373
- EP-A1- 3 189 947
- JP-A- S 642 893
- US-A1- 2016 277 887

## Beschreibung

Die vorliegende Erfindung betrifft ein Verfahren zum Überwachen einer Arbeitsumgebung eines bewegbaren Geräts mit einer Überwachungseinrichtung und eine solche Überwachungseinrichtung.

In industriellen Umgebungen werden Bewegungen eines bewegbaren Geräts, wie zum Beispiel eines Industrieroboters, häufig überwacht. Dabei geht es beispielsweise darum, zu verhindern, dass der Industrieroboter eine vorgeschriebene Arbeitszone verlässt, um so Unfälle zu verhindern. Zur autonomen Überwachung einer die Arbeitszone umfassenden Arbeitsumgebung ist insbesondere wichtig, dass die Arbeitszone korrekt modelliert wird. Es besteht ein Bedarf, eine korrekte Modellierung autonom zu ermöglichen.

Die Offenlegungsschrift der europäischen Patentanmeldung EP 3 189 947 A1 zeigt ein Verfahren zum Konfigurieren und zum Betreiben einer überwachten automatisierten Arbeitszelle mit einem Erstellen von Schutzraumdaten anhand von Maschinenraumdaten. Die Schutzraumdaten werden anhand der Maschinenraumdaten festgelegt. Eine Überwachungseinrichtung ist dafür vorgesehen, einen Schutzraum um den mehrachsigen Roboter herum zu überprüfen, ob sich in dem überprüften Schutzraum eine Person oder ein Objekt aufhält oder eine Kollision mit einem Hindernis oder einer Person ereignen könnte.

Vor diesem Hintergrund besteht eine Aufgabe der vorliegenden Erfindung darin, ein verbessertes Verfahren zum Überwachen einer Arbeitsumgebung eines bewegbaren Geräts mit einer Überwachungseinrichtung zu schaffen. Eine weitere Aufgabe besteht darin, eine verbesserte Überwachungseinrichtung zum Überwachen einer Arbeitsumgebung eines bewegbaren Geräts bereitzustellen. Gemäß einem ersten Aspekt wird ein Verfahren zum Überwachen einer Arbeitsumgebung eines bewegbaren Geräts mit einer Überwachungseinrichtung vorgeschlagen, das in Anspruch 1 definiert wird, wobei die Arbeitsumgebung eine Arbeitszone und zumindest eine Schutzzone umfasst, wobei das bewegbare Gerät sich in seinem Normalbetrieb in der Arbeitszone befindet. Das Verfahren umfasst:
Eingabe, durch einen Benutzer, einer Vielzahl an konvexen Polytopen in die Überwachungseinrichtung, wobei die konvexen Polytopen Zonen entsprechen, in denen das bewegbare Gerät sich im Normalbetrieb befindet;
Bestimmen einer konvexen Polytophülle durch die Überwachungseinrichtung, wobei die konvexe Polytophülle die Vielzahl an konvexe Polytopen vollständig umfasst; und
Bestimmen der zumindest einen Schutzzone durch Bildung einer Differenz aus der konvexen Polytophülle und der Eingabe durch die Überwachungseinrichtung.

Anhand des beschriebenen Verfahrens gemäß dem ersten Aspekt können eine Polytophülle und zumindest eine Schutzzone der zu überwachenden Arbeitsumgebung autonom bestimmt werden. Autonom bedeutet dabei insbesondere, durch die Überwachungseinrichtung und nicht durch eine Person. Durch diese autonome Bestimmung der zwei genannten Parameter durch die Überwachungseinrichtung kann eine Konfiguration der zur Überwachung dienenden Überwachungseinrichtung vereinfacht werden, weil der Benutzer weder die Polytophülle noch die Schutzzone manuell bestimmen und in die Überwachungseinrichtung eingeben muss. Eine Modellierung der Arbeitsumgebung wird insbesondere vereinfacht, wodurch auch der Überwachungsvorgang vereinfacht werden kann. Zudem ermöglicht das beschriebene Verfahren ein flexibleres Einsetzen der zur Überwachung dienenden Überwachungseinrichtung, weil diese bei Veränderungen der Benutzereingabe mit wenig Aufwand die Polytophülle und die zumindest eine Schutzzone neu bestimmen kann.

Das bewegbare Gerät ist insbesondere ein Gerät, welches zumindest einen bewegbaren Teil hat. Bei dem bewegbaren Gerät handelt es sich zum Beispiel um eine Maschine mit einer oder mehreren bewegbaren Achsen, um einen Roboter, um einen Kran und/oder um ein Fahrzeug. Insbesondere wird das bewegbare Gerät in einer industriellen Umgebung eingesetzt. Das bewegbare Gerät kann auch als Kinematik bezeichnet werden.

Wenn das bewegbare Gerät korrekt funktioniert, also im Normalbetrieb, beschränkt es seine Bewegungen insbesondere auf die Arbeitszone. Verlässt das bewegbare Gerät zumindest teilweise die Arbeitszone, kann zum Beispiel von einem Fehlverhalten des bewegbaren Geräts ausgegangen werden.

Die Arbeitsumgebung ist insbesondere eine Zone, die durch die Überwachungseinrichtung überwachbar ist, zum Beispiel anhand von Sensoren. Sie kann die Arbeitszone und Schutzzonen umfassen.

Zur Einleitung der Überwachung der Arbeitsumgebung durch die Überwachungseinrichtung kann der Benutzer des bewegbaren Geräts eine Eingabe in die Überwachungseinrichtung machen. Hierzu kann der Benutzer zum Beispiel eine Schnittstelle der Überwachungseinrichtung verwenden. Die Eingabe kann über eine graphische Schnittstelle der Überwachungseinrichtung erfolgen. Es ist auch möglich, ein CAD-Dokument als Eingabe an die Überwachungseinrichtung zu schicken oder einzugeben.

Die Eingabe umfasst insbesondere eine Vielzahl an konvexen Polytopen. Die einzelnen konvexen Polytopen können Zonen angeben, in denen das bewegbare Gerät sich im Normalbetrieb bewegen darf. Die konvexen Polytopen der Eingabe können sich überlappen. Insgesamt bildet die Gesamtheit der konvexen Polytopen insbesondere die Arbeitszone.

Unter einem Polytop versteht sich insbesondere ein verallgemeinertes Polygon in beliebiger Dimension. Bevorzugt handelt es sich bei den Polytopen um zwei- oder dreidimensionale Polygone. Konvex bedeutet hier, dass alle internen Winkel der Polytopen weniger als 180° messen.

Die Gesamtheit der konvexen Polytopen entspricht insbesondere einer nicht-konvexen konkaven Arbeitszone. Derzeit ist es insbesondere nicht effizient möglich, zu prüfen, ob sich ein Polytop vollständig in einer Arbeitszone befindet, wenn es sich bei dieser Arbeitszone um ein konkaves Polytop handelt. Gerade deshalb ist die Bestimmung der Polytophülle und der Schutzzone(n) wichtig, weil Polytophülle und Schutzzonen konvexe Polytope sind, die effizient auf Verlassen bzw. Überlappung geprüft werden können.

Die Überwachungseinrichtung kann eine Recheneinheit, zum Beispiel ein Prozessor eines Computers sein. Sie kann auch Teil eines Industrie-PCs oder einer speicherprogrammierbaren Steuerung (SPS) sein.

Die Überwachungseinrichtung kann geeignet sein, basieren auf der Benutzereingabe die Polytophülle autonom zu bestimmen. Die Polytophülle kann als kleinstes konvexes Polytop betrachtet werden, das alle konvexen Polytopen der Eingabe enthält. Die Polytophülle kann die konvexen Polytopen umhüllen bzw. ummanteln. Die Polytophülle erstreckt sich dabei insbesondere entlang der konvexen Bereiche der Arbeitszone und vergrößert diese um die Schutzzonen in den konkaven Bereichen der Arbeitszone. Es kann aber auch ein größerer Abstand zwischen der Polytophülle und der Arbeitszone erstrecken.

Die konvexe Polytophülle kann die Summe aus der Arbeitszone und den Schutzzonen entsprechen. Zur Bestimmung der Polytophülle kann die Überwachungseinrichtung zum Beispiel die Algorithmen aus den Artikeln "Optimal output-sensitive convex hull algorithm in two and three dimensions" (T. M. Chan et. al., Discrete and Computational Geometry, 16, 1996, Seiten 361 - 368) oder "The quickhull algorithm for convex hulls" (C. Bradford Barber et al., ACM Transactions on Mathematical Software (TOMS), Volume 22, Issue 4, Dec. 1996, Seiten 469 - 483) anwenden. In Spezialfällen, z.B. wenn es sich bei allen Zonen um an den Achsen ausgerichtete Quader handelt, kann die Bestimmung der Hülle auch einfach durch Vergrößerung der Länge einer Zone erfolgen. Es sind jedoch auch andere bekannte Algorithmen zur Bestimmung der Polytophülle anwendbar.

Die bestimmte Polytophülle kann durch die Überwachungseinrichtung verwendet werden, um autonom die zumindest eine Schutzzone zu bestimmen. Hierzu kann die Überwachungseinrichtung die Differenz aus der Polytophülle und der konvexen Polytopen der Eingabe bilden. Die Schutzzonen sind insbesondere Zonen der Arbeitsumgebung, die nicht zur Arbeitszone aber zur Polytophülle gehören. Die Differenzbildung kann anhand der Algorithmen erfolgen, die in dem Artikel "Boolean Operations on Arbitrary Polyhedral Meshes" (Säm Landier, Computer-Aided Design, Elsevier, 2016, Seiten 1-35, 10.1016/j.cad.2016.07.013, hal-01394537) beschrieben sind. In Spezialfällen, z.B. wenn es sich bei allen Zonen um an den Achsen ausgerichtete Quader handelt, kann die Differenzbildung sich stark vereinfachen. Es sind jedoch auch andere bekannte Algorithmen zur Differenzbildung verwendbar.

Durch die Bestimmung der Polytophülle und der Schutzzone(n) kann insbesondere eine vollständige Charakterisierung der Arbeitszone erfolgen. Das Verlassen der Arbeitszone wird dabei insbesondere nicht direkt geprüft, doch anhand der bestimmten Polytophülle und Schutzzone(n) kann die Arbeitszone genauso gut wie bei einer direkten Bestimmung überwacht werden. Eine Überwachung von konkaven Arbeitszonen kann somit vereinfacht werden, weil sie autonom eingerichtet werden kann.

Erfindungsgemäß umfasst das Verfahren ferner:
Bestimmen, ob das bewegbare Gerät sich vollständig innerhalb der bestimmten Polytophülle befindet; und
lediglich falls bestimmt wird, dass das bewegbare Gerät sich nicht vollständig innerhalb der bestimmten Polytophülle befindet, Durchführen einer ersten Sicherheitsmaßnahme.

Im Rahmen der Überwachung kann die Überwachungseinrichtung bestimmen, ob das bewegbare Gerät sich innerhalb der bestimmten Polytophülle befindet. Dabei wird insbesondere bestimmt, ob sich das bewegbare Gerät vollständig in der Polytophülle befindet. Zur Bestimmung der Position des bewegbaren Geräts bezüglich der Polytophülle können diverse Sensoren der Überwachungseinrichtung und/oder des bewegbaren Geräts verwendet werden. Das bewegbare Gerät (insbesondere dessen bewegbaren Teile) kann mit einem Positionssensor, der zum Beispiel eine GPS-Position der Teile verfolgt, ausgestattet sein. Eine weitere Möglichkeit zur Bestimmung der Position ist die Erfassung aller Achspositionen einer Mehrachskinematik (z.B. Industrieroboter), und der anschließenden Bestimmung aller beweglichen Teile durch Vorwärtstransformation. Die Überwachungseinrichtung kann auch anhand einer Kamera die Position des bewegbaren Geräts überwachen und so bestimmen, ob das bewegbare Gerät vollständig in der Polytophülle enthalten ist oder nicht.

Falls die Überwachungseinrichtung bestimmt, dass das bewegbare Gerät zumindest teilweise die Polytophülle verlassen hat, deutet dies beispielsweise auf eine Fehlfunktion des bewegbaren Geräts und/oder auf ein Risiko hin. In dem Fall kann die Überwachungseinrichtung eine erste Sicherheitsmaßnahme durchführen, um die Sicherheit des bewegbaren Geräts und dessen Umgebung zu gewährleisten. Beispiele für die erste Sicherheitsmaßnahme werden im Folgenden noch näher erläutert.

Gemäß einer weiteren Ausführungsform umfasst das Verfahren ferner:
Bestimmen, ob das bewegbare Gerät sich zumindest teilweise innerhalb der zumindest einen bestimmten Schutzzone befindet; und
lediglich falls bestimmt wird, dass das bewegbare Gerät sich zumindest teilweise innerhalb der zumindest einen bestimmten Schutzzone befindet, Durchführen einer zweiten Sicherheitsmaßnahme.

Im Rahmen der Überwachung kann die Überwachungseinrichtung bestimmen, ob das bewegbare Gerät sich ganz oder teilweise innerhalb der bestimmten Schutzzone(n) befindet. Zur Bestimmung der Position des bewegbaren Geräts bezüglich der mindestens einen Schutzzone können die diversen Sensoren der Überwachungseinrichtung und/oder des bewegbaren Geräts verwendet werden, die bereits oberhalb beschrieben wurden. Zur Überprüfung, ob das bewegbare Gerät zumindest teilweise mit einer der Schutzzonen überlappt, kann die Überwachungseinrichtung zum Beispiel Funktionen zur paarweisen Prüfung von konvexen Polytopen verwenden, wie sie zum Beispiel in "Real-Time Collision Detection" (Christer Ericson, Morgan Kaufmann, 2005) beschrieben sind.

Falls die Überwachungseinrichtung bestimmt, dass das bewegbare Gerät zumindest teilweise in einer Schutzzone ist, deutet dies beispielsweise auf eine Fehlfunktion des bewegbaren Geräts und/oder auf ein Risiko hin. In dem Fall kann die Überwachungseinrichtung eine zweite Sicherheitsmaßnahme durchführen, um die Sicherheit des bewegbaren Geräts und dessen Umgebung zu gewährleisten. Beispiele für die zweite Sicherheitsmaßnahme werden im Folgenden noch näher erläutert.

Gemäß einer weiteren Ausführungsform umfasst die konvexe Polytophülle die Vielzahl an konvexe Polytopen derart vollständig, dass ein Volumen der konvexen Polytophülle minimal ist. Das heißt beispielsweise, dass die konvexe Polytophülle die kleineste geometrische Form ist, die die konvexen Polytopen alle umfasst und gleichzeitig konvex ist.

Gemäß einer weiteren Ausführungsform ist das bewegbare Gerät ein Roboter in einer industriellen Anlage. Dieser Roboter wird beispielsweise in der Produktfertigung verwendet.

Gemäß einer weiteren Ausführungsform entspricht zumindest einer der durch den Benutzer eingegebenen konvexen Polytopen einem Übergabebereich, der eine Übergabe von Fertigungsprodukten zwischen einem Innenbereich der Arbeitszone und einem Außenbereich der Arbeitszone ermöglicht.

Der Übergabebereich kann ein Bereich sein, in dem das bewegbare Gerät (insbesondere ein bewegbarer Roboterarm) ein gefertigtes Produkt oder ein Werkteil an ein nächstes bewegbares Gerät oder an einen Benutzer weitergibt. Der Übergabebereich kann auch ein Bereich sein, in dem ein Benutzer oder ein anderes externes Gerät dem bewegbaren Gerät etwas angibt. Anders ausgedrückt, handelt es sich bei dem Übergabebereich insbesondere um einen Interaktionsbereich zwischen dem bewegbaren Gerät und der "Außenwelt" außerhalb der Arbeitszone.

Solche Übergabebereiche sind häufig nach außen vorstehende Vorsprünge der Arbeitszone, die dazu führen, dass die Arbeitszone eine konkave Form hat. Bei Arbeitszonen mit Übergabebereichen ist das Verfahren gemäß dem ersten Aspekt besonders vorteilhaft.

Bei der Eingabe der konvexen Polytopen kann der Benutzer angeben, dass es sich bei einem oder mehreren der Polytopen um Übergabebereiche handelt. Die Recheneinheit kann diese Information speichern und bei der Überwachung der Arbeitsumgebung berücksichtigen.

Gemäß einer weiteren Ausführungsform umfasst das Verfahren ferner:
Bestimmen, ob ein Benutzer und/oder ein externes Gerät von außerhalb der Arbeitszone in den Übergabebereich greift;
Bestimmen, ob das bewegbare Gerät sich zumindest teilweise innerhalb des Übergabebereichs befindet; und
lediglich falls bestimmt wird, dass ein Benutzer und/oder ein externes Gerät von außerhalb der Arbeitszone in den Übergabebereich greift und, dass das bewegbare Gerät sich zumindest teilweise innerhalb des Übergabebereichs befindet, Durchführen einer dritten Sicherheitsmaßnahme.

Im Rahmen der Überwachung kann die Überwachungseinrichtung bestimmen, ob das bewegbare Gerät sich teilweise oder ganz innerhalb des Übergabebereichs befindet. Ferner kann die Recheneinheit bestimmen, ob ein weiterer externer Gegenstand, wie zum Beispiel das externe Gerät oder der Benutzer, sich teilweise in dem Übergabebereich befinden.

Zur Bestimmung der Position des bewegbaren Geräts und des externen Gegenstands können die zuvor bereits beschriebenen Sensoren verwendet werden.

Falls die Überwachungseinrichtung bestimmt, dass das bewegbare Gerät zumindest teilweise in der Übergabebereich ist, während ein externer Gegenstand auch in dem Übergabebereich ist, deutet dies beispielsweise auf eine Fehlfunktion des bewegbaren Geräts und/oder auf ein Risiko hin. In dem Fall kann die Überwachungseinrichtung eine dritte Sicherheitsmaßnahme durchführen, um die Sicherheit des bewegbaren Geräts und dessen Umgebung zu gewährleisten. Beispiele für die dritte Sicherheitsmaßnahme werden im Folgenden noch näher erläutert.

Gemäß einer weiteren Ausführungsform umfasst die erste, zweite und/oder dritte Sicherheitsmaßnahme:
Ausschalten des bewegbaren Geräts;
Ausgeben eines visuellen Alarms; und/oder
Ausgeben eines Alarmtons.

Durch das Ausschalten des bewegbaren Geräts kann verhindert werden, dass das bewegbare Gerät einen Benutzer außerhalb der Arbeitszone verletzt, gegen Hindernisse außerhalb der Arbeitszone stößt oder dergleichen. Durch die Ausgabe eines Alarms kann der Benutzer darauf aufmerksam gemacht werden, dass ein Fehlverhalten des bewegbaren Geräts und/oder eine Gefahr vorliegt. Der visuelle Alarm und/oder der Alarmton können ferner die erkannte Gefahr bzw. den erkannten Fehler charakterisieren, damit der Benutzer richtig eingreifen kann.

Gemäß einer weiteren Ausführungsform hat die Arbeitszone eine konkave Form.

Gemäß einem zweiten Aspekt wird eine Überwachungseinrichtung zum Überwachen einer Arbeitsumgebung eines bewegbaren Geräts bereitgestellt, die in Anspruch 8 definiert wird, wobei die Arbeitsumgebung eine Arbeitszone und zumindest eine Schutzzone umfasst, und wobei das bewegbare Gerät eingerichtet ist, sich in seinem Normalbetrieb in der Arbeitszone zu befinden. Die Überwachungseinrichtung umfasst:
eine Eingabeeinheit zur Eingabe, durch einen Benutzer, einer Vielzahl an konvexen Polytopen, wobei die konvexen Polytopen Zonen entsprechen, in denen das bewegbare Gerät sich im Normalbetrieb befindet;
eine Hüllenbestimmungseinheit zum Bestimmen einer konvexen Polytophülle, wobei die konvexe Polytophülle die Vielzahl an konvexe Polytopen vollständig umfasst; und
eine Schutzzonenbestimmungseinheit zum Bestimmen der zumindest einen Schutzzone durch Bildung einer Differenz aus der konvexen Polytophülle und der Eingabe.

Die für das Verfahren gemäß dem ersten Aspekt beschriebenen Ausführungsformen und Merkmale gelten für die Überwachungseinrichtung gemäß dem zweiten Aspekt entsprechend. Insbesondere ist die Überwachungseinrichtung des zweiten Aspekts geeignet, das Verfahren gemäß dem ersten Aspekt oder gemäß einer Ausführungsform des ersten Aspekts durchzuführen.

Die jeweilige Einheit, zum Beispiel Eingabeeinheit, Hüllenbestimmungseinheit oder Schutzzonenbestimmungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem dritten Aspekt wird ein Computerprogrammprodukt vorgeschlagen, welches auf einer programmgesteuerten Einrichtung die Durchführung des wie oben erläuterten Verfahrens gemäß dem ersten Aspekt oder gemäß einer Ausführungsform des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein Beispiel für ein bewegbares Gerät in einer Arbeitsumgebung;
Fig. 2 zeigt eine bekannte Modellierung einer Arbeitszone;
Fig. 3 zeigt ein Beispiel eine mathematisch korrekte Modellierung einer Arbeitszone;
Fig. 4 zeigt ein Beispiel eine mathematisch korrekte Modellierung eines Übergabebereichs;
Fig. 5 zeigt ein Verfahren zum Überwachen einer Arbeitsumgebung gemäß einer ersten Ausführungsform;
Fig. 6 zeigt ein Beispiel einer Benutzereingabe;
Fig. 7 zeigt ein Beispiel einer bestimmten Polytophülle;
Fig. 8 zeigt ein Beispiel einer bestimmten Arbeitsumgebung;
Fig. 9 zeigt ein Verfahren zum Überwachen einer Arbeitsumgebung gemäß einer zweiten Ausführungsform; und
Fig. 10 zeigt eine Überwachungseinrichtung gemäß einer Ausführungsform.

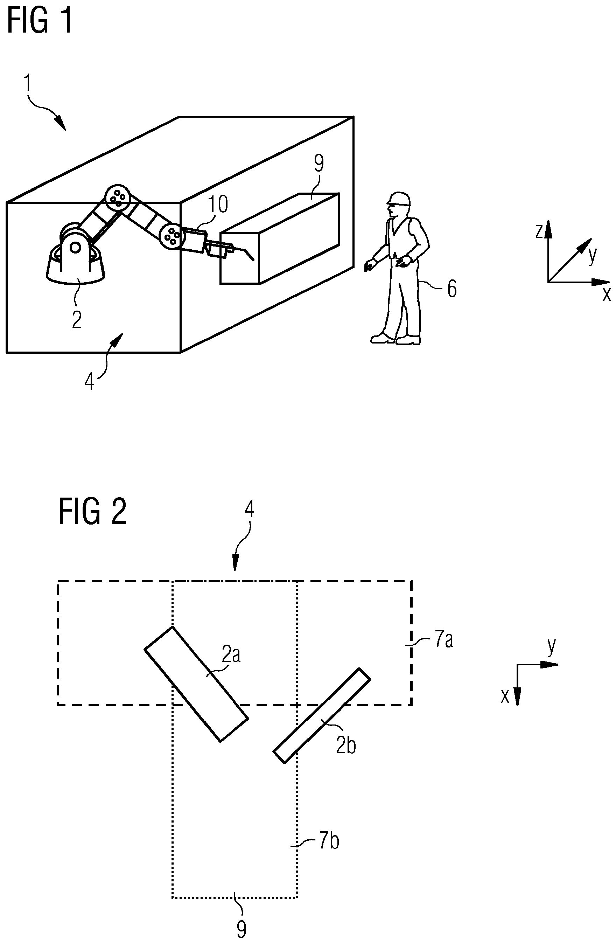

In den Figuren sind gleiche oder funktionsgleiche Elemente mit denselben Bezugszeichen versehen worden, sofern nichts anderes angegeben ist. In den Fig. 2, 3, 6, 7 und 8 werden die Polytopen als zweidimensionale Formen dargestellt, weil dies einfacher darzustellen ist. Es handelt sich bei den Formen jedoch in der Regel um dreidimensionale Polytopen. Zweidimensionale Polytopen (Polygone) sind jedoch auch nicht ausgeschlossen.

Fig. 1 zeigt ein Beispiel für ein bewegbares Gerät 2 in einer Arbeitsumgebung 1. Das bewegbare Gerät 2 ist ein Industrieroboter, der in der Fertigung von Produkten, zum Beispiel von Autos, verwendet wird. Der Roboter 2 umfasst einen Roboterarm 10, der bewegbar ist, um während der Fertigung zu bearbeitende Teile zu bewegen.

Die Bewegung des Roboterarms 10 und somit des Roboters 2 sind im Normalbetrieb auf eine Arbeitszone 4 der Arbeitsumgebung 1 beschränkt. Das heißt, dass der Roboter 2 nur bei Fehlverhalten die Arbeitszone 4 teilweise oder ganz verlässt.

Die Arbeitszone 4 ist aus zwei Quadern gebildet: ein großer Quader sowie ein davorgesetzter kleiner Quader 9, der einen Übergabebereich bildet. Der Übergabebereich 9 dient dazu, durch den Roboter 2 bearbeitete Produkte an einen Benutzer 6 auszugeben. Der Übergabebereich 9 ist dabei die einzige Schnittstelle zwischen einem Inneren der Arbeitszone 4 und einem Äußeren der Arbeitszone 4.

Um sicherzustellen, dass der Roboter 2 ordnungsgemäß arbeitet, ohne den Benutzer 6 zu verletzen und ohne die Umgebung außerhalb der Arbeitszone 4 zu zerstören, ist es wichtig zu überprüfen, ob der Roboter 2 tatsächlich vollständig in der Arbeitszone 4 bleibt oder nicht.

Zur Überwachung mit einer Überwachungseinrichtung muss zunächst die Arbeitszone 4 modelliert werden. Die Fig. 2 zeigt eine bekannte Modellierung einer solchen Arbeitszone 4.

Wie in der Fig. 2 dargestellt, wird die Arbeitszone 4 in dieser bekannten Modellierung durch zwei Polytope (Quader) 7a, 7b modelliert, wobei der nicht mit dem Quader 7a überlappende Teil des Quaders 7b den Überwachungsbereich 9 modellieren soll. Es wird dann überwacht, ob jedes bewegbare Gerät (Roboter) 2a, 2b sich in dem ersten Quader 7a oder in dem zweiten Quader 7b befindet. Die Modellierung und Prüfung gemäß Fig. 2 weist jedoch mehrere Nachteile auf.

Tatsächlich befindet sich der Roboter 2a teilweise außerhalb des Quaders 7a und teilweise außerhalb des Quaders 7b, aber vollständig innerhalb der Arbeitszone 4. Trotzdem würde die Überwachungseinrichtung in einem solchen Fall fehlerhaft ein Fehlverhalten des Roboters 2a identifizieren.

Auch bei einer Prüfung, ob alle Ecken des Roboters 2a, 2b sich in den Quadern 7a, 7b befinden, wäre die Überwachung nicht zuverlässig. Tatsächlich befinden sich zwar alle Ecken des Roboters 2b in den Quadern 7a, 7b, jedoch liegt der Roboter 2b nicht vollständig in der Arbeitszone 4. Dies würde im Rahmen der Überprüfung gemäß Fig. 2 nicht erkannt werden.

Die bekannte Modellierung aus der Fig. 2 ist mathematisch gesehen daher nicht korrekt.

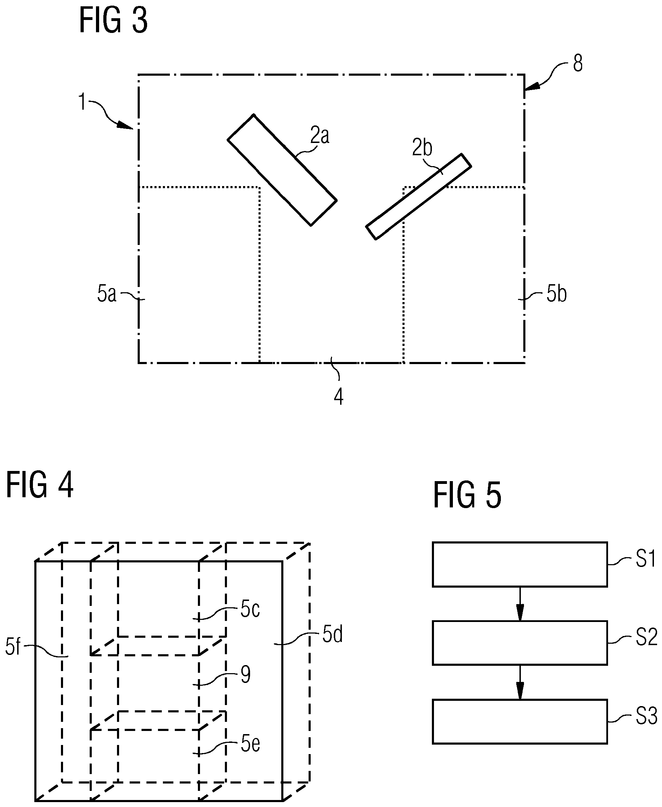

Fig. 3 zeigt eine mathematisch korrekte Modellierung einer Arbeitszone 4. Die Arbeitszone 4 wird hier aus einer Differenz zwischen einer Polytophülle 8, die die eigentliche Arbeitszone 4 vollständig umfasst, und Schutzzonen 5a, 5b gebildet. Im Gegensatz zur Fig. 2 erfolgt die Definition der Arbeitszone nicht durch Vereinigung von Körpern 7a, 7b, sondern durch Bildung einer Differenz.

Eine manuelle Bestimmung und Eingabe der Schutzzonen 5a, 5b ist besonders bei der Modellierung des herausragenden Übergabebereichs 9 aufwendig, kognitiv anspruchsvoll und daher fehleranfällig. Dies ist beispielsweise in der Fig. 4 dargestellt, in der vier Schutzzonen 5c - 5f für die Definition des Übergabebereichs 9 notwendig sind.

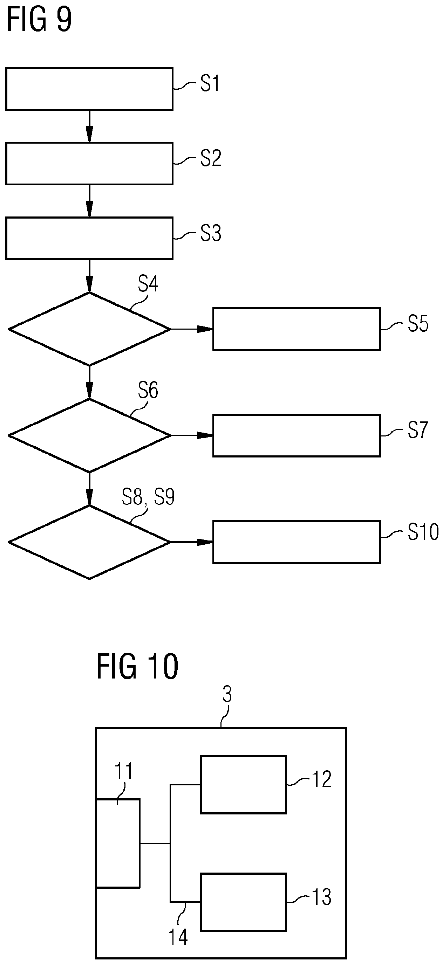

Fig. 5 zeigt ein Verfahren zum Überwachen einer Arbeitsumgebung 1 gemäß einer ersten Ausführungsform. Das Verfahren der Fig. 5 dient dazu, autonom das mathematisch korrekte Modell der Arbeitszone 4 gemäß Fig. 3 zu erzielen. Das dargestellte Verfahren wird anhand einer Überwachungseinrichtung 3 durchgeführt, welche in der Fig. 10 dargestellt ist und eine Eingabeeinheit 11, eine Hüllenbestimmungseinheit 12 und eine Schutzzonenbestimmungseinheit 13 umfasst, welche mit einem internen Bus 14 miteinander verbunden sind.

In einem Schritt S1 (Fig. 5) erfolgt eine Eingabe einer Vielzahl an konvexen Polytopen 7c, 7d, 7e in die Eingabeeinheit 11 der Überwachungseinrichtung 3 durch den Benutzer 6. Die Eingabeeinheit 11 ist dabei eine graphische Schnittstelle der Überwachungseinrichtung 3, mit der der Benutzer 6 die Polytopen 7c - 7e zeichnen kann.

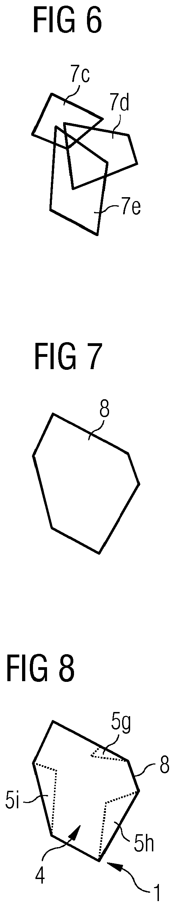

Ein Beispiel für eine solche Benutzereingabe ist in der Fig. 8 gezeigt. Die Eingabe der Fig. 8 enthält drei Polytopen 7c - 7e, welche jeweils eine konvexe Form haben. Zwischen den Polytopen 7c - 7e besteht ein Überlapp. Die Polytopen 7c - 7e bilden gemeinsam die gesamte Arbeitszone 4. Das heißt, dass die Polytopen 7c - 7e den Zonen entsprechen, in denen der Roboter 2 sich im Normalbetrieb befindet. Das Polytop 7c bildet dabei einen Übergabebereich 9 im zuvor beschriebenen Sinne.

Die Überwachungseinrichtung 3 kann die konkave Arbeitszone 4, die sich aus den Polytopen 7c - 7e der Fig. 6 ergibt, nicht direkt überwachen, weil sie konkav ist. Deshalb führt die Überwachungseinrichtung 3 autonom noch weitere Verfahrensschritte S2, S3 durch, um die Arbeitszone 3 richtig zu modellieren und die Überwachung zu ermöglichen.

In dem Schritt S2 der Fig. 5 bestimmt die Hüllenbestimmungseinheit 12 der Überwachungseinrichtung 3 eine konvexe Polytophülle 8. Die für die Polytopen 7c - 7e bestimmte Polytophülle 8 ist in der Fig. 7 dargestellt. Die konvexe Polytophülle 8 umfasst die konvexe Polytopen 7c - 7e vollständig. Das heißt, dass die konvexe Polytophülle 8 derart durch die Überwachungseinrichtung 3 bestimmt wird, dass sie die drei Polytopen 7c - 7e umfasst und gleichzeitig konvex ist.

Zur Bestimmung der Polytophülle 8 wendet die Hüllenbestimmungseinheit 12 den Algorithmus an, der in dem Artikel "Optimal output-sensitive convex hull algorithm in two and three dimensions" (T. M. Chan et. al., Discrete and Computational Geometry, 16, 1996, Seiten 361 - 368) beschrieben ist.

In dem Schritt S3 der Fig. 5 bestimmt die Schutzzonenbestimmungseinheit 13 der Überwachungseinrichtung 3 die zumindest eine Schutzzone 5g - 5i durch Bildung einer Differenz aus der bestimmten konvexen Polytophülle 8 und der Benutzereingabe.

In der Fig. 8 sind die so bestimmten Schutzzonen 5g - 5i zu sehen. Die Schutzzonen 5g - 5i und die konvexen Polytopen 7c - 7e der Eingabe (Fig. 6) bilden gemeinsam die Polytophülle 8.

Zur Bildung der Differenz und Bestimmung der Schutzzonen wendet die Schutzzonenbestimmungseinheit 13 den Algorithmus aus dem Artikel "Boolean Operations on Arbitrary Polyhedral Meshes" (Säm Landier, Computer-Aided Design, Elsevier, 2016, Seiten 1-35, 10.1016/j.cad.2016.07.013, hal-01394537) an.

Durch die Bestimmung sowohl der Polytophülle 8 als auch der Schutzzonen 7c - 7e wird eine vollständige autonome Charakterisierung bzw. Modellierung der Arbeitszone 4 gemäß dem mathematisch korrekten Modell aus der Fig. 3 ermöglicht.

Anhand des bestimmten Modells der Arbeitszone 4 kann die Überwachungseinrichtung 3 auf einfache und zuverlässige Weise Überwachen, ob der Roboter 2 in der Arbeitszone 4 bleibt oder nicht.

Diese Überwachung der Position des Roboters 2 kann zum Beispiel gemäß dem Verfahren aus der Fig. 9 erfolgen. Die Verfahrensschritte S1 - S3 aus der Fig. 9 entsprechen den bereits anhand der Fig. 5 beschriebenen Verfahrensschritten S1 - S3 und werden deshalb nicht nochmal beschrieben.

In einem Schritt S4 der Fig. 9 bestimmt die Überwachungseinrichtung 3, zum Beispiel anhand einer nicht dargestellten Überprüfungseinheit, ob der Roboter 2 sich vollständig innerhalb der Polytophülle 8 befindet. Hierzu überwacht die Überwachungseinrichtung 3 den Roboter 2 mit einer nicht dargestellten Kamera.

Falls in dem Schritt S4 bestimmt wird, dass der Roboter 2 nicht vollständig innerhalb der Polytophülle 8 ist, wird der Schritt S5 durchgeführt, in dem eine erste Sicherheitsmaßnahme getroffen wird. Bei der ersten Sicherheitsmaßnahme handelt es sich hier um ein Ausschalten des Roboters 2, um zu verhindern, dass er einen Benutzer 6 verletzt.

Falls in dem Schritt S4 bestimmt wird, dass der Roboter 2 vollständig innerhalb der Polytophülle 8 ist, wird der Schritt S6 durchgeführt. In dem Schritt S6 der Fig. 9 bestimmt die Überwachungseinrichtung 3, zum Beispiel anhand der nicht dargestellten Überprüfungseinheit, ob der Roboter 2 sich zumindest teilweise innerhalb einer Schutzzone 5g - 5i befindet. Hierzu überwacht die Überwachungseinrichtung 3 den Roboter 2 mit der nicht dargestellten Kamera.

Falls in dem Schritt S6 bestimmt wird, dass der Roboter 2 zumindest teilweise innerhalb einer der Schutzzonen 5g - 5i ist, wird der Schritt S7 durchgeführt, in dem eine zweite Sicherheitsmaßnahme getroffen wird. Bei der zweiten Sicherheitsmaßnahme handelt es sich hier um ein Ausschalten des Roboters 2, um zu verhindern, dass er einen Benutzer 6 verletzt.

Falls in dem Schritt S6 bestimmt wird, dass der Roboter 2 nicht teilweise in einer Schutzzone 5g - 5i liegt, werden die Schritte S8 und S9 durchgeführt. In dem Schritt S8 der Fig. 9 bestimmt die Überwachungseinrichtung 3, zum Beispiel anhand der nicht dargestellten Überprüfungseinheit, ob der Roboter 2 sich zumindest teilweise innerhalb des Überwachungsbereichs 7c befindet. Hierzu überwacht die Überwachungseinrichtung 3 den Roboter 2 mit der nicht dargestellten Kamera.

In dem Schritt S9 der Fig. 9 bestimmt die Überwachungseinrichtung 3, zum Beispiel anhand der nicht dargestellten Überprüfungseinheit, ob ein externes Gerät (nicht dargestellt) oder ein Benutzer 6 sich zumindest teilweise innerhalb des Überwachungsbereichs 7c befindet. Hierzu überwacht die Überwachungseinrichtung 3 den Roboter 2 mit der nicht dargestellten Kamera .

Falls in dem Schritt S8 und S9 bestimmt wird, dass der Roboter 2 zumindest teilweise innerhalb des Überwachungsbereichs 9 ist, und dass das externe Gerät und/oder der Benutzer auch mindestens teilweise in dem Überwachungsbereich 9 sind, wird der Schritt S10 durchgeführt, in dem eine dritte Sicherheitsmaßnahme getroffen wird. Bei der dritten Sicherheitsmaßnahme handelt es sich hier um ein Ausschalten des Roboters 2, um zu verhindern, dass er einen Benutzer 6 verletzt.

Die Schritte S4, S6, S8 und S9 können wiederholt durchgeführt werden, um so eine zuverlässige Überwachung der Roboterposition zu ermöglichen.

Bei einer Änderung der Arbeitsumgebung 1 kann der Benutzer 6 eine neue Eingabe in die Überwachungseinrichtung 3 machen. In dem Fall werden die Schritte S1 - S10 erneut durchgeführt.

Obwohl die vorliegende Erfindung anhand von Ausführungsbeispielen beschrieben wurde, ist sie vielfältig modifizierbar. Die Schritte S4, S6, S8 und S9 können auch in einer anderen Reihenfolge oder gleichzeitig durchgeführt werden. Die Anzahl an konvexen Polytopen 7c - 7e der Benutzereingabe kann variieren, genauso wie ihre Formen und Anordnungen zueinander. Die zur Bestimmung der Polytophülle 8 und der Schutzzonen 5g - 5i verwendeten Algorithmen können auch von den beschriebenen Algorithmen abweichen, solange sie den gleichen Zweck erfüllen. Das bewegbare Gerät 2 kann auch als ein Fahrzeug oder dergleichen ausgebildet sein. In einer selben Arbeitszone 4 können auch mehrere bewegbaren Geräte 2 vorliegen, die im Normalbetrieb die Arbeitszone 4 nicht verlassen.

### Bezugszeichenliste

- 1: Arbeitsumgebung
- 2, 2a, 2b: bewegbares Gerät
- 3: Überwachungseinrichtung
- 4: Arbeitszone
- 5a - 5i: Schutzzone
- 6: Benutzer
- 7a - 7e: konvexes Polytop
- 8: Polytophülle
- 9: Übergabebereich
- 10: Roboterarm
- 11: Eingabeeinheit
- 12: Hüllenbestimmungseinheit
- 13: Schutzzonenbestimmungseinheit
- 14: interner Bus
- S1 - S10: Verfahrensschritte

## Patentansprüche

1. Verfahren zum Überwachen einer Arbeitsumgebung (1) eines bewegbaren Geräts (2, 2a, 2b) mit einer Überwachungseinrichtung (3), wobei die Arbeitsumgebung (1) eine Arbeitszone (4) und zumindest eine Schutzzone (5a - 5i) umfasst, wobei das bewegbare Gerät (2, 2a, 2b) sich in seinem Normalbetrieb in der Arbeitszone (4) befindet; umfassend:
Eingabe (S1), durch einen Benutzer (6), einer Vielzahl an konvexen Polytopen (7a - 7e) in die Überwachungseinrichtung (3), wobei die konvexen Polytopen (7a - 7e) Zonen entsprechen, in denen das bewegbare Gerät (2, 2a, 2b) sich im Normalbetrieb befindet;
Bestimmen (S2) einer konvexen Polytophülle (8) durch die Überwachungseinrichtung (3), wobei die konvexe Polytophülle (8) die Vielzahl an konvexen Polytopen (7a - 7e) vollständig derart umfasst, dass ein Volumen der konvexen Polytophülle (8) minimal ist; und
Bestimmen (S3) der zumindest einen Schutzzone (5a - 5i) durch Bildung einer Differenz aus der konvexen Polytophülle (8) und der Eingabe durch die Überwachungseinrichtung (3) wobei das Verfahren ferner umfasst:
Bestimmen (S4), ob das bewegbare Gerät (2, 2a, 2b) sich vollständig innerhalb der bestimmten Polytophülle (8) befindet; und
lediglich falls bestimmt wird, dass das bewegbare Gerät (2, 2a, 2b) sich nicht vollständig innerhalb der bestimmten Polytophülle (8) befindet, Durchführen (S5) einer ersten Sicherheitsmaßnahme.

2. Verfahren nach Anspruch 1, wobei das Verfahren ferner umfasst:
Bestimmen (S6), ob das bewegbare Gerät (2, 2a, 2b) sich zumindest teilweise innerhalb der zumindest einen bestimmten Schutzzone (5a - 5i) befindet; und
lediglich falls bestimmt wird, dass das bewegbare Gerät (2, 2a, 2b) sich zumindest teilweise innerhalb der zumindest einen bestimmten Schutzzone (5a - 5i) befindet, Durchführen (S7) einer zweiten Sicherheitsmaßnahme.

3. Verfahren nach einem der Ansprüche 1 oder 2, wobei das bewegbare Gerät (2, 2a, 2b) ein Roboter in einer industriellen Anlage ist.

4. Verfahren nach einem der Ansprüche 1 bis 3, wobei zumindest einer der durch den Benutzer (6) eingegebenen konvexen Polytopen (7a - 7e) einem Übergabebereich (9) entspricht, der eine Übergabe von Fertigungsprodukten zwischen innerhalb der Arbeitszone (4) und außerhalb der Arbeitszone (4) ermöglicht.

5. Verfahren nach Anspruch 4, wobei das Verfahren ferner umfasst:
Bestimmen (S8), ob ein Benutzer (6) und/oder ein externes Gerät von außerhalb der Arbeitszone (4) in den Übergabebereich (9) greift;
Bestimmen (S9), ob das bewegbare Gerät (2, 2a, 2b) sich zumindest teilweise innerhalb des Übergabebereichs (9) befindet; und
lediglich falls bestimmt wird, dass ein Benutzer (6) und/oder ein externes Gerät von außerhalb der Arbeitszone (4) in den Übergabebereich (9) greift und, dass das bewegbare Gerät (2, 2a, 2b) sich zumindest teilweise innerhalb des Übergabebereichs (9) befindet, Durchführen (S10) einer dritten Sicherheitsmaßnahme.

6. Verfahren nach einem der Ansprüche 1, 2, oder 5, wobei die erste, zweite und/oder dritte Sicherheitsmaßnahme umfasst:
Ausschalten des bewegbaren Geräts (2, 2a, 2b);
Ausgeben eines visuellen Alarms; und/oder
Ausgeben eines Alarmtons.

7. Verfahren nach einem der Ansprüche 1 bis 6, wobei die Arbeitszone (4) eine konkave Form hat.

8. Überwachungseinrichtung (3) zum Überwachen einer Arbeitsumgebung (1) eines bewegbaren Geräts (2, 2a, 2b), wobei die Arbeitsumgebung (1) eine Arbeitszone (4) und zumindest eine Schutzzone (5a - 5i) umfasst, wobei das bewegbare Gerät (2, 2a, 2b) eingerichtet ist, sich in seinem Normalbetrieb in der Arbeitszone (4) zu befinden; umfassend:
eine Eingabeeinheit (11) zur Eingabe, durch einen Benutzer (6), einer Vielzahl an konvexen Polytopen (7a - 7e), wobei die konvexen Polytopen (7a - 7e) Zonen entsprechen, in denen das bewegbare Gerät (2, 2a, 2b) sich im Normalbetrieb befindet;
eine Hüllenbestimmungseinheit (12) zum Bestimmen einer konvexen Polytophülle (8), wobei die konvexe Polytophülle (8) die Vielzahl an konvexen Polytopen (7a - 7e) vollständig derart umfasst, dass ein Volumen der konvexen Polytophülle (8) minimal ist; und
eine Schutzzonenbestimmungseinheit (13) zum Bestimmen der zumindest einen Schutzzone (5a - 5i) durch Bildung einer Differenz aus der konvexen Polytophülle (8) und der Eingabe,
wobei die Überwachungseinrichtung geeignet ist, ob das bewegbare Gerät sich vollständig innerhalb der bestimmten Polytophülle befindet zu bestimmen und
lediglich falls bestimmt wird, dass das bewegbare Gerät sich nicht vollständig innerhalb der bestimmten Polytophülle befindet, einer ersten Sicherheitsmaßnahme durchzuführen.

9. Überwachungseinrichtung nach Anspruch 8, die geeignet ist, das Verfahren nach einem der Ansprüche 2 bis 7 durchzuführen.

## Claims

1. Method for monitoring a working environment (1) of a movable device (2, 2a, 2b) using a monitoring apparatus (3), wherein the working environment (1) comprises a working zone (4) and at least one protection zone (5a - 5i), wherein the movable device (2, 2a, 2b) is located in the working zone (4) during its normal operation; comprising:
inputting (S1), by a user (6), a multiplicity of convex polytopes (7a - 7e) into the monitoring apparatus (3), wherein the convex polytopes (7a - 7e) correspond to zones in which the movable device (2, 2a, 2b) is located during normal operation;
determining (S2) a convex polytope shell (8) by the monitoring apparatus (3), wherein the convex polytope shell (8) completely encloses the multiplicity of convex polytopes (7a - 7e) such that a volume of the convex polytope shell (8) is minimal; and determining (S3) the at least one protection zone (5a - 5i) by forming a difference between the convex polytope shell (8) and the input by the monitoring apparatus (3), wherein the method furthermore comprises:
determining (S4) whether the movable device (2, 2a, 2b) is located completely within the determined polytope shell (8); and
only performing (S5) a first safety measure if it is determined that the movable device (2, 2a, 2b) is not located completely within the determined polytope shell (8).

2. Method according to Claim 1, wherein the method furthermore comprises:
determining (S6) whether the movable device (2, 2a, 2b) is located at least partly inside the at least one determined protection zone (5a - 5i); and
only performing (S7) a second safety measure if it is determined that the movable device (2, 2a, 2b) is located at least partly inside the at least one determined protection zone (5a - 5i).

3. Method according to either of Claims 1 and 2, wherein the movable device (2, 2a, 2b) is a robot in an industrial installation.

4. Method according to one of Claims 1 to 3, wherein at least one of the convex polytopes (7a - 7e) input by the user (6) corresponds to a transfer area (9) that allows a transfer of manufactured products between inside the working zone (4) and outside the working zone (4).

5. Method according to Claim 4, wherein the method furthermore comprises:
determining (S8) whether a user (6) and/or an external device reaches into the transfer area (9) from outside the working zone (4) ;
determining (S9) whether the movable device (2, 2a, 2b) is located at least partly within the transfer area (9); and
only performing (S10) a third safety measure if it is determined that a user (6) and/or an external device reaches into the transfer area (9) from outside the working zone (4) and that the movable device (2, 2a, 2b) is located at least partly within the transfer area (9).

6. Method according to one of Claims 1, 2, or 5, wherein the first, second and/or third safety measure comprises:
switching off the movable device (2, 2a, 2b);
emitting a visual alarm; and/or
emitting an alarm sound.

7. Method according to one of Claims 1 to 6, wherein the working zone (4) has a concave shape.

8. Monitoring apparatus (3) for monitoring a working environment (1) of a movable device (2, 2a, 2b), wherein the working environment (1) comprises a working zone (4) and at least one protection zone (5a - 5i), wherein the movable device (2, 2a, 2b) is set up to be located in the working zone (4) during its normal operation; comprising:
an input unit (11) for inputting, by a user (6), a multiplicity of convex polytopes (7a - 7e), wherein the convex polytopes (7a - 7e) correspond to zones in which the movable device (2, 2a, 2b) is located during normal operation;
a shell determination unit (12) for determining a convex polytope shell (8), wherein the convex polytope shell (8) completely encloses the multiplicity of convex polytopes (7a - 7e) such that a volume of the convex polytope shell (8) is minimal; and
a protection zone determination unit (13) for determining the at least one protection zone (5a - 5i) by forming a difference between the convex polytope shell (8) and the input, wherein the monitoring apparatus is suitable for determining whether the movable device is located completely within the determined polytope shell and only performing a first safety measure if it is determined that the movable device is not located completely within the determined polytope shell.

9. Monitoring apparatus according to Claim 8, suitable for performing the method according to one of Claims 2 to 7.

## Revendications

1. Procédé pour la surveillance d'un environnement de travail (1) d'un appareil mobile (2, 2a, 2b) avec un dispositif de surveillance (3), dans lequel l'environnement de travail (1) comporte une zone de travail (4) et au moins une zone de protection (5a-5i), dans lequel l'appareil mobile (2, 2a, 2b) se trouve, dans son fonctionnement normal, dans la zone de travail (4) ; comportant :
la saisie (S1), par un utilisateur (6), d'une pluralité de polytopes convexes (7a-7e) dans le dispositif de surveillance (3), dans lequel les polytopes convexes (7a-7e) correspondent à des zones dans lesquelles se trouve l'appareil mobile (2, 2a, 2b) dans le fonctionnement normal ;
la détermination (S2) d'une coque de polytopes convexes (8) par le dispositif de surveillance (3), dans lequel la coque de polytopes convexes (8) comporte la pluralité de polytopes convexes (7a-7e) complètement de telle sorte qu'un volume de la coque de polytopes convexes (8) soit minimal ; et
la détermination (S3) de l'au moins une zone de protection (5a-5i) par formation d'une différence de la coque de polytopes convexes (8) et de la saisie par le dispositif de surveillance (3), le procédé comportant en outre :
le fait de déterminer (S4) si l'appareil mobile (2, 2a, 2b) se trouve complètement à l'intérieur de la coque de polytopes (8) déterminée ; et
uniquement dans le cas où il est déterminé que l'appareil mobile (2, 2a, 2b) ne se trouve pas complètement à l'intérieur de la coque de polytopes (8) déterminée, la mise en oeuvre (S5) d'une première mesure de sécurité.

2. Procédé selon la revendication 1, le procédé comportant en outre :
le fait de déterminer (S6) si l'appareil mobile (2, 2a, 2b) se trouve au moins en partie à l'intérieur de l'au moins une zone de protection (5a-5i) déterminée ; et
uniquement dans le cas où il déterminé que l'appareil mobile (2, 2a, 2b) se trouve au moins en partie à l'intérieur de l'au moins une zone de protection (5a-5i) déterminée, la mise en oeuvre (S7) d'une deuxième mesure de sécurité.

3. Procédé selon l'une des revendications 1 ou 2, dans lequel l'appareil mobile (2, 2a, 2b) est un robot dans une installation industrielle.

4. Procédé selon l'une des revendications 1 à 3, dans lequel au moins l'un des polytopes convexes (7a-7e) saisis par l'utilisateur (6) correspond à une région de transfert (9), laquelle permet un transfert de produits de fabrication entre l'intérieur de la zone de travail (4) et l'extérieur de la zone de travail (4).

5. Procédé selon la revendication 4, le procédé comportant en outre :
le fait de déterminer (S8) si un utilisateur (6) et/ou un appareil externe accèdent, depuis l'extérieur de la zone de travail (4), à la région de transfert (9) ;
le fait de déterminer (S9) si l'appareil mobile (2, 2a, 2b) se trouve au moins en partie à l'intérieur de la région de transfert (9) ; et
uniquement dans le cas où il est déterminé qu'un utilisateur (6) et/ou un appareil externe accèdent, depuis l'extérieur de la zone de travail (4), à la région de transfert (9) et que l'appareil mobile (2, 2a, 2b) se trouve au moins en partie à l'intérieur de la région de transfert (9), la mise en oeuvre (S10) d'une troisième mesure de sécurité.

6. Procédé selon l'une des revendications 1, 2, ou 5, dans lequel la première, deuxième et/ou troisième mesure de sécurité comporte :
l'extinction de l'appareil mobile (2, 2a, 2b) ;
l'émission d'une alarme visuelle ; et/ou
l'émission d'une tonalité d'alarme.

7. Procédé selon l'une des revendications 1 à 6, dans lequel la zone de travail (4) a une forme concave.

8. Dispositif de surveillance (3) pour la surveillance d'un environnement de travail (1) d'un appareil mobile (2, 2a, 2b), dans lequel l'environnement de travail (1) comporte une zone de travail (4) et au moins une zone de protection (5a-5i), dans lequel l'appareil mobile (2, 2a, 2b) est conçu pour se trouver, dans son fonctionnement normal, dans la zone de travail (4) ; comportant :
une unité de saisie (11) pour la saisie, par un utilisateur (6), d'une pluralité de polytopes convexes (7a-7e), dans lequel les polytopes convexes (7a-7e) correspondent à des zones dans lesquelles se trouve l'appareil mobile (2, 2a, 2b) dans le fonctionnement normal ;
une unité de détermination de coque (12) pour la détermination d'une coque de polytopes convexes (8), dans lequel la coque de polytopes convexes (8) comporte la pluralité de polytopes convexes (7a-7e) complètement de telle sorte qu'un volume de la coque de polytopes convexes (8) soit minimal ; et
une zone de détermination de zones de protection (13) pour la détermination de l'au moins une zone de protection (5a-5i) par formation d'une différence de la coque de polytopes convexes (8) et de la saisie, dans lequel le dispositif de surveillance est approprié pour déterminer si l'appareil mobile se trouve complètement à l'intérieur de la coque de polytopes déterminée et,
uniquement dans le cas où il est déterminé que l'appareil mobile ne se trouve pas complètement à l'intérieur de la coque de polytopes déterminée, pour mettre en oeuvre une première mesure de sécurité.

9. Dispositif de surveillance selon la revendication 8, lequel est approprié pour mettre en oeuvre le procédé selon l'une des revendications 2 à 7.
